# EUROPEAN PATENT SPECIFICATION

(11) **EP 2 780 202 B1**
(45) Date of publication and mention of the grant of the patent: **17.07.2019**
(21) Application number: 12786947.7
(22) Date of filing: 08.11.2012
(51) Int. Cl.: B60S 1/16, H02K 5/14

(54) **WINDSCREEN WIPER MOTOR**
SCHEIBENWISCHERMOTOR
MOTEUR D'ESSUIE-GLACE

(30) Priority: 15.11.2011 DE 102011055336
(43) Date of publication of application: 24.09.2014
(73) Proprietor: Valeo Systèmes d'Essuyage, 78322 Le Mesnil Saint Denis (FR)
(72) Inventor: HEUBERGER, Christof, 71691 Freiberg (DE); STEFANI, Siegfried, 71739 Oberriexingen (DE); HARTMANN, Werner, 71665 Vaihingen/Enz (DE)
(74) Representative: Callu-Danseux, Violaine
(86) International application number: PCT/EP2012/072084
(87) International publication number: WO 2013/072236

(56) References cited:
- EP-A2- 1 968 169
- WO-A2-2011/107407
- DE-A1- 4 238 925
- FR-A1- 2 140 491
- US-A- 5 015 897
- US-A- 5 659 211
- US-A1- 2002 047 347
- US-B1- 6 737 593

## Description

### Prior Art

The invention relates to a windscreen wiper motor according to the preamble of claim 1.

A windscreen wiper motor of this type is already known from practice (see for instance document FR 2 140 491 A1) and has a shaft carrying an armature, said shaft being arranged within a windscreen wiper motor housing. The windscreen wiper motor housing therefore normally consists of two housing half shells receiving the shaft at least in the region of the armature. Alternatively, housing constructions are known that consist of a motor housing and a transmission housing connected to the motor housing in the region of a connection flange. Brushes, which are arranged fixedly within the windscreen wiper motor housing, are provided to electrically contact the armature or the collector thereof. To this end, it is known to arrange the brushes on a corresponding carrier element and to in turn receive the carrier element with a positive or clamped fit in a corresponding recess between the housing half shells, for example. In addition, it is known from the prior art to fasten the brushes or the holding element thereof in the windscreen wiper motor housing by means of additional fastening elements in the form of screws or the like. Whilst the first-mentioned possibility requires the windscreen wiper motor housing to be formed from two interconnectable housing parts, the second method requires a relatively high assembly effort and is also associated with defects or has to be monitored for defects.

### Disclosure of the Invention

Proceeding from the presented prior art, the object of the invention is to develop a windscreen wiper motor according to the preamble of claim 1 in such a way that a brush carrier device can be fastened in the windscreen wiper motor housing largely irrespectively of the constructional design of the windscreen wiper motor housing and, at the same time, with relatively low assembly effort. This object is achieved in accordance with the invention with a windscreen wiper motor having the features of claim 1.

Advantageous developments of the windscreen wiper motor according to the invention are disclosed in the dependent claims.

In a particularly preferred constructional embodiment of the brush carrier device, it is proposed that the brush carrier device has a brush carrier plate which carries several brushes, that the brush carrier plate has an aperture for the guiding through of the shaft, and that several, preferably two extensions and securing elements are provided, which are arranged in uniform radial angular distances around the aperture. With an embodiment of this type it is possible on the one hand for all brushes or necessary components to be assembled beforehand in the region of the brush carrier plate, such that the brush carrier plate only has to be assembled on the whole as a unit within the windscreen wiper motor housing in a single assembly step. On the other hand, a relatively high rigidity of the brush carrier device is ensured by the geometric design with simultaneously relatively short axial extension (in the longitudinal direction of the shaft).

In an embodiment of the invention that is most preferred in terms of the production process, it is proposed that the windscreen wiper motor housing is constructed as an aluminum pressure die casting at least in the region of the at least one extension, and that the at least one extension is a component part of the aluminum pressure die casting. The at least one extension is thus constructed already with the construction of the housing, without an additional manufacturing step, wherein a relatively good heat dissipation with low weight of the windscreen wiper motor housing is achieved as a result of the construction in the form of an aluminum pressure die casting.

In accordance with a further preferred constructional embodiment of the windscreen wiper motor housing, in the region of the brush carrier device and of the armature the windscreen wiper motor housing is constructed in one piece cylindrically with a mounting opening for a bearing cover, wherein on the side lying opposite the mounting opening a radially inwardly projecting base region is provided, on which the at least one extension is arranged, pointing in the direction of the mounting opening.

In accordance with a further advantageous embodiment, so as to achieve, as easily as possible, an axial delimitation of the path of displacement during the assembly of the brush carrier device, the at least one extension also has a first partial region, which is arranged in the region of the first opening of the brush carrier device, and a second partial region, which adjoins via a stepped shoulder on the side of the first partial region facing away from the brush carrier device, and the shoulder forms an axial stop for the brush carrier device.

According to the invention the securing element is particularly simple and reliable in terms of its function and is constructed in the form of a securing disc with elastically deformable securing sections, which cooperate with the extension.

So as to ensure the fastening of the securing disc on the brush carrier device or the brush carrier plate, the securing disc has at least one fastening claw, which penetrates the brush carrier device in the region of a second opening constructed as a hole and fastens the securing disc on the brush carrier device such that a passage opening for the extension on the securing disc is aligned with the first opening.

So as to facilitate the assembly of the brush carrier device on the extension, the first region of the extension may also be constructed in pin form with a slightly conical shape. In particular in the case of a pot-shaped housing, with which the extension is no longer readily visible with manual assembly, a "threading" of the brush carrier device on the extension is thus enabled.

Further advantages, features and details of the invention will emerge from the following description of preferred exemplary embodiments and with the help of the drawing, in which:
- figure 1: shows an exploded view of the component parts of a windscreen wiper motor according to the invention,
- figure 2: shows a longitudinal section through a partially assembled windscreen wiper motor according to figure 2,
- figure 3: shows an end-face view of the windscreen wiper motor according to figure 2,
- figure 4: shows a section in the plane IV-IV of figure 3, and
- figure 5: shows a perspective, isolated view of a securing disc used to fasten a brush carrier plate.

Like components and functionally like components are provided with like reference numerals in the figures.

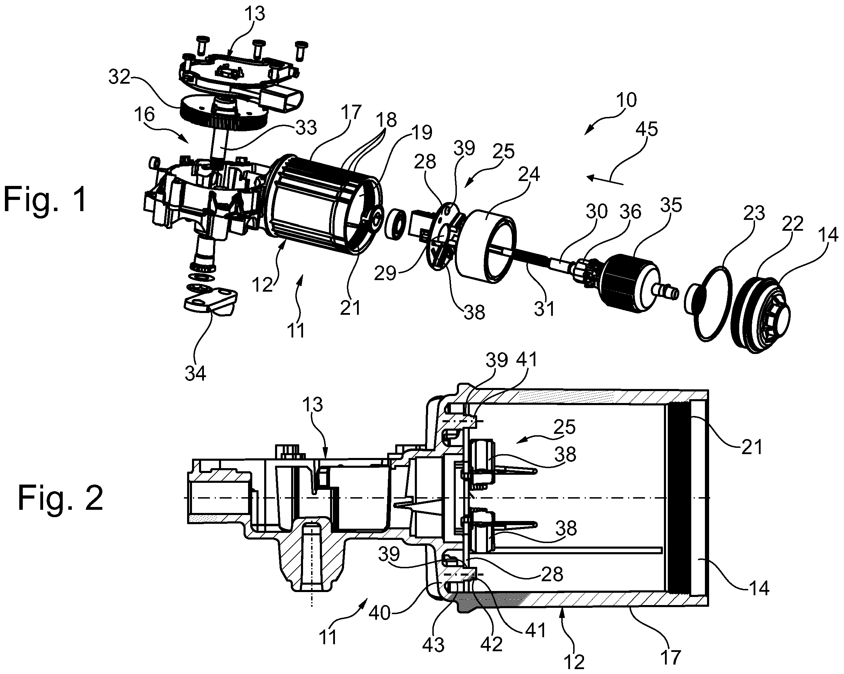

The main component parts of a windscreen wiper motor 10 according to the invention are illustrated in an exploded view in figure 1. The windscreen wiper motor 10 comprises a housing 11, which consists of a housing base part 12, a transmission cover 13 and a bearing cover 14. On the side of the housing base part 12 facing away from the bearing cover 14, said housing base part has a transmission mounting region 16 arranged integrally on the housing base part 12. The transmission mounting region 16 is closed by means of the transmission cover 13. The housing base part 12 is preferably constructed from an aluminum pressure die casting and has a cylindrical region 17, on the outer face of which cooling ribs 18 arranged in the longitudinal direction are formed integrally. On the side facing toward the bearing cover 14, the housing base part 12 has a mounting opening 19 for the bearing cover 14. The bearing cover 14 is connected with the housing base part 12 via a threaded connection comprising an inner thread 21 and an outer thread 22, with a ring seal 23 axially interposed.

When the windscreen wiper motor 10 is assembled, a flow ring 24 and a brush carrier device 25 *inter alia* are arranged within the housing base part 12. The brush carrier device 25 has an annular brush carrier plate 28, which centrally has an aperture 29. An armature shaft 30 penetrates the aperture 29 and has a toothing region 31 at its end facing away from the bearing cover 14, said toothing region meshing with a driving wheel 32, which is used to gear down the speed of the windscreen wiper motor 10. The driving wheel 32 has an output shaft 33, which is used to actuate a wiper rod assembly (not illustrated), for example, via a lever 34.

In the region of the transmission base part 12, the armature shaft 30 also has an armature 35, which is fastened on the armature shaft 30 in a rotationally engaged manner. The armature 35 or the windings thereof, which are not illustrated in greater detail, is/are connected with a collector 36, against which brushes 38 rest in a known manner when the windscreen wiper motor 10 is assembled, said brushes being assembled or fastened on the brush carrier plate 28.

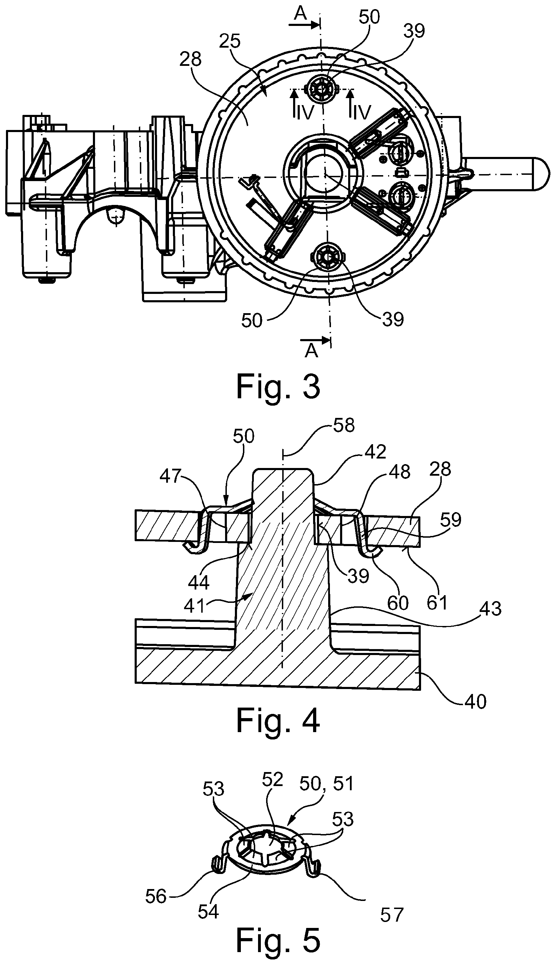

The invention relates to the fastening of the brush carrier device 25 or the brush carrier plate 28 within the housing base part 12 of the housing 11. To this end, the brush carrier plate 28 has several, in the exemplary embodiment two, first openings 39, each in the form of an aperture, arranged offset from one another by 180° and arranged over a pitch circle diameter around the aperture 29. As can best be seen with reference to figure 2, on the side facing away from the transmission cover 13, the housing base part 12 has a radially inwardly drawn base region or intermediate region 40, from which an extension 41 projects in the direction of the transmission cover 13 for each first opening 39. The extension 41 formed integrally on the housing base part 12 during the casting process has a first region 42 and a second region 43 of enlarged diameter compared to the first region 42, which both transition into one another via a shoulder 44 (figure 4). The second region 43 of the cone-shaped or pin-shaped extension 41 thus has a diameter or a cross-sectional area that is greater than the opening cross section of the first opening 39, such that the shoulder 44 forms an axial stop for the brush carrier plate 28 when the brush carrier plate 28 is assembled in the direction of the arrow 45 (figure 1).

In the axial end position of the brush carrier plate 28 on the extension 41 (figure 4), the diameter of the first region 42 of the extension 41 is preferably slightly smaller than the size of the first opening 39, such that a certain radial play can be set between the brush carrier plate 28 and the extensions 41. In addition, the first region 42 of the extension 41 is preferably slightly conical, that is to say it has a slightly smaller diameter on the side facing away from the second region 43 than on the side facing toward the second region 43.

As can best be seen with reference to figure 4, two second openings 47, 48, in particular in the form of apertures, are formed over a pitch circle diameter around the first opening 39 in the brush carrier plate 28. A securing element 50 can be fastened on the brush carrier plate 28 by means of the second openings 47, 48.

The securing element 50 in the form of a securing ring 51 illustrated in isolation in figure 5 centrally has a passage opening 52, which cooperates with the extension 41. As is known per se, the securing ring 51 further comprises several, in the exemplary embodiment six, securing sections 53, which are arranged at uniform angular distances from one another, protrude radially inwardly, project upwardly at an incline from the plane of the annular main body 54 and are used to grasp and position the securing ring 51 on the extension 41. On mutually opposed sides of the main body 54 of the securing ring 51, said main body has two fastening claws 56, 57 cooperating with the second openings 47, 48. The fastening claws 56, 57 formed integrally on the securing ring 51 have a section 59, which runs within the second openings 47, 48 approximately parallel to the axis of symmetry 58 of the securing ring 51 and to which a radially outwardly curved holding section 60 adjoins. The two fastening claws 56, 57 are elastically deformable radially in the direction of the axis of symmetry 58 toward the axis of symmetry 58, in such a way that, to fasten the securing ring 51 on the brush carrier plate 28, the fastening claws 56, 57 are pressed together radially inwardly so that they can be passed through the second openings 47, 48. As soon as the holding sections 60 are arranged on the side of the brush carrier plate 28 facing away from the securing sections 53, the radially active force on the fastening claws 56, 57 can be reduced, such that the holding sections 60 are operatively connected with the underside 61 of the brush carrier pate 28, as in accordance with figure 4, and fix or fasten the securing ring 51 on the brush carrier plate 28.

With securing rings 51 and brushes 38 assembled on the brush carrier plate 28, the brush carrier plate 28 is assembled within the housing base part 12 by introducing the brush carrier device 25 into the housing base part 12 in the direction of the arrow 45, that is to say in the longitudinal direction of the armature shaft 30, such that the first openings 39 are aligned or in line with the extensions 41. As the extensions 41 and the first openings 39 are moved axially relative to each other, the passage openings 52 in the securing rings 51 then come into contact with the extensions 41. By sliding on or pressing on the brush carrier plate 28 further in the direction of the arrow 45, the securing sections 53 expand radially, that is to say that a cross section is created that enables the securing rings 51 to be slid over onto the extensions 41. During this process, the securing sections 53 grip the extensions 41 in such a way that the brush carrier plate 28 cannot be withdrawn from the extensions 41 due to the inclined arrangement of the securing sections 53. The process of assembling the brush carrier plate 28 on the extensions 41 is complete as soon as the underside 61 of the brush carrier plate 28 rests against the respective shoulder 44 of the extension 41. The armature shaft 30, together with the collector 36, can then be introduced into the housing base part 12, wherein the collector 36 becomes operatively connected with the brushes 38 of the brush carrier device 25.

The windscreen wiper motor 10 described thus far can be altered or modified in a versatile manner, without departing from the scope of the inventive concept, as defined in the attached claims.

For example, it is thus conceivable to use merely one extension 41, or else more than two extensions 41. Lastly, the invention also is not limited to the use in a pot-shaped or cylindrical housing 11 in the region of the brush carrier plate 28.

### List of Reference Signs

- 10: windscreen wiper motor
- 11: housing
- 12: housing base part
- 13: transmission cover
- 14: bearing cover
- 16: transmission mounting region
- 17: cylindrical region
- 18: cooling rib
- 19: mounting opening
- 21: inner thread
- 22: outer thread
- 23: ring seal
- 24: flow ring
- 25: brush carrier device
- 28: brush carrier plate
- 29: aperture
- 30: armature shaft
- 31: toothing region
- 32: driving wheel
- 33: output shaft
- 34: lever
- 35: armature
- 36: collector
- 38: brush
- 39: openings
- 40: intermediate region
- 41: extension
- 42: first region
- 43: second region
- 44: shoulder
- 45: arrow
- 47: second opening
- 48: second opening
- 50: securing element
- 51: securing ring
- 52: passage opening
- 53: securing section
- 54: main body
- 56: fastening claw
- 57: fastening claw
- 58: axis of symmetry
- 59: section
- 60: holding section
- 61: underside

## Claims

1. A windscreen wiper motor (1), with a shaft (30) carrying an armature (35) and a collector (36), wherein the collector (36) cooperates with brushes (38), which are arranged on a brush carrier device (25), and wherein the brush carrier device (25) is arranged fixedly in a windscreen wiper motor housing (11), the brush carrier device (25) has at least a first opening (39) constructed as an aperture, which is penetrated by a preferably cone-shaped extension (41) connected with the windscreen wiper motor housing (11), that on the side facing away from the fastening side of the extension (41) in the windscreen wiper motor housing (11) the extension (41) projects over the brush carrier device (25) in the region of the at least one first opening (39), and that a securing element (50) is connected with the brush carrier device (25), which securing element on the axial moving relative to each other of the extension (41) and of the securing element (50) jams with the extension (41) and thereby secures the brush carrier device (25) on the extension (41) in the longitudinal direction of the shaft (30), the securing element (50) is constructed in the form of a securing disc (51) with elastically deformable securing sections (53), which cooperate with the extension (41),
**characterized in that**
the securing disc (51) has at least one fastening claw (56, 57), which penetrates the brush carrier device (25) in the region of a second opening (47, 48) constructed as a hole and fastens the securing disc (51) on the brush carrier device (25) such that a passage opening (52) for the extension (41) on the securing disc (51) is aligned with the first opening (39).

2. The windscreen wiper motor according to Claim 1,
**characterized in that**
the brush carrier device (25) has a brush carrier plate (28) which carries several brushes (38), that the brush carrier plate (28) has an aperture (29) for the guiding through of the shaft (30), and that several, preferably two extensions (41) and securing elements (50) are provided, which are arranged in uniform angular distances around the aperture (29).

3. The windscreen wiper motor according to Claim 1 or 2,
**characterized in that**
the windscreen wiper motor housing (11) is constructed as an aluminium pressure die casting at least in the region of the at least one extension (41), and that the at least one extension (41) is a component part of the aluminium pressure die casting.

4. The windscreen wiper motor according to Claims 1 to 3,
**characterized in that**
in the region of the brush carrier device (25) and of the armature (35) the windscreen wiper motor housing (11) is constructed in one piece cylindrically with a mounting opening (19) for a bearing cover (14), wherein on the side lying opposite the mounting opening (19) a radially inwardly projecting base region (40) is provided, on which the at least one extension (41) is arranged, pointing in the direction of the mounting opening (19).

5. The windscreen wiper motor according to one of Claims 1 to 4,
**characterized in that**
the at least one extension (41) has a first partial region (42), which is arranged in the region of the first opening (39) of the brush carrier device (25), and a second partial region (43), which adjoins via a stepped shoulder (44) on the side of the first partial region (42) facing away from the brush carrier device (25), and that the shoulder (44) forms an axial stop for the brush carrier device (25).

6. The windscreen wiper motor according to one of Claims 1 to 5,
**characterized in that**
the first opening (39) of the brush carrier device (25) in the region of the axial end position of the extension (41) has a slightly greater cross-sectional area compared with the passage opening (52) of the securing disc (51).

7. The windscreen wiper motor according to one of Claims 1 to 6,
**characterized in that**
two fastening claws (56, 57) are provided, arranged offset radially with respect to each other through 180°, and that the fastening claws (56, 57) are arranged to as to be elastically movable in radial direction in relation to the longitudinal axis (58) of the securing disc (51), and are held in the second opening (47, 48) under radial pre-stressing.

8. The windscreen wiper motor according to one of Claims 1 to 7,
**characterized in that**
the first region (42) of the extension (41) is constructed in pin form with a conical shape.

## Patentansprüche

1. Scheibenwischermotor (1), mit einer einen Anker (35) und einen Kollektor (36) tragenden Welle (30), wobei der Kollektor (36) mit Bürsten (38) zusammenwirkt, die an einer Bürstenträgereinrichtung (25) angeordnet sind, und wobei die Bürstenträgereinrichtung (25) in einem Scheibenwischermotorgehäuse (11) ortsfest angeordnet ist, die Bürstenträgereinrichtung (25) wenigstens eine als Durchbruch ausgebildete erste Öffnung (39) aufweist, die von einem vorzugsweise zapfenförmigen, mit dem Scheibenwischermotorgehäuse (11) verbundenen Fortsatz (41) durchsetzt ist, dass der Fortsatz (41) auf der der Befestigungsseite des Fortsatzes (41) in dem Scheibenwischermotorgehäuse (11) abgewandten Seite die Bürstenträgereinrichtung (25) im Bereich der wenigstens einen ersten Öffnung (39) überragt, und dass mit der Bürstenträgereinrichtung (25) ein Sicherungselement (50) verbunden ist, das beim axialen Gegeneinanderbewegen des Fortsatzes (41) und des Sicherungselements (50) sich mit dem Fortsatz (41) verklemmt und dadurch die Bürstenträgereinrichtung (25) auf dem Fortsatz (41) in Längsrichtung der Welle (30) sichert, das Sicherungselement (50) in Form einer Sicherungsscheibe (51) mit elastisch verformbaren Sicherungsabschnitten (53), die mit dem Fortsatz (41) zusammenwirken, ausgebildet ist,
**dadurch gekennzeichnet,**
**dass** die Sicherungsscheibe (51) wenigstens eine Befestigungskralle (56, 57) aufweist, die die Bürstenträgereinrichtung (25) im Bereich einer als Loch ausgebildeten zweiten Öffnung (47, 48) durchgreift und die Sicherungsscheibe (51) an der Bürstenträgereinrichtung (25) befestigt, derart, dass eine Durchführöffnung (52) für den Fortsatz (41) an der Sicherungsscheibe (51) mit der ersten Öffnung (39) ausgerichtet ist.

2. Scheibenwischermotor nach Anspruch 1,
**dadurch gekennzeichnet,**
**dass** die Bürstenträgereinrichtung (25) eine Bürstenträgerplatte (28) aufweist, die mehrere Bürsten (38) trägt, dass die Bürstenträgerplatte (28) einen Durchbruch (29) zur Durchführung der Welle (30) aufweist, und dass mehrere, vorzugsweise zwei Fortsätze (41) und Sicherungselemente (50) vorgesehen sind, die in gleichmäßigen Winkelabständen um den Durchbruch (29) angeordnet sind.

3. Scheibenwischermotor nach Anspruch 1 oder 2,
**dadurch gekennzeichnet,**
**dass** das Scheibenwischermotorgehäuse (11) zumindest im Bereich des wenigstens einen Fortsatzes (41) als Aluminium-Druckgußteil ausgebildet ist, und dass der wenigstens eine Fortsatz (41) Bestandteil des Aluminium-Druckgußteils ist.

4. Scheibenwischermotor nach einem der Ansprüche 1 bis 3,
**dadurch gekennzeichnet,**
**dass** das Scheibenwischermotorgehäuse (11) im Bereich der Bürstenträgereinrichtung (25) und des Ankers (35) einstückig zylindrisch mit einer Aufnahmeöffnung (19) für einen Lagerdeckel (14) ausgebildet ist, wobei auf der der Aufnahmeöffnung (19) gegenüberliegenden Seite ein radial nach innen ragender Bodenbereich (40) vorgesehen ist, an dem der wenigstens eine Fortsatz (41) in Richtung zur Aufnahmeöffnung (19) weisend, angeordnet ist.

5. Scheibenwischermotor nach einem der Ansprüche 1 bis 4,
**dadurch gekennzeichnet,**
**dass** der wenigstens eine Fortsatz (41) einen ersten Teilbereich (42) aufweist, der im Bereich der ersten Öffnung (39) der Bürstenträgereinrichtung (25) angeordnet ist und einen zweiten Teilbereich (43), der sich über einen stufenförmigen Absatz (44) auf der der Bürstenträgereinrichtung (25) abgewandten Seite des ersten Teilbereichs (42) anschließt, und dass der Absatz (44) einen Axialanschlag für die Bürstenträgereinrichtung (25) ausbildet.

6. Scheibenwischermotor nach einem der Ansprüche 1 bis 5,
**dadurch gekennzeichnet,**
**dass** die erste Öffnung (39) der Bürstenträgereinrichtung (25) im Bereich der axialen Endlage des Fortsatzes (41) im Vergleich zur Durchführöffnung (52) der Sicherungsscheibe (51) eine geringfügig größere Querschnittsfläche aufweist.

7. Scheibenwischermotor nach einem der Ansprüche 1 bis 6,
**dadurch gekennzeichnet,**
**dass** zwei, um 180° radial zueinander versetzt angeordnete Befestigungskrallen (56, 57) vorgesehen sind, und dass die Befestigungskrallen (56, 57) in radialer Richtung in Bezug zur Längsachse (58) der Sicherungsscheibe (51) elastisch beweglich angeordnet sind und in der zweiten Öffnung (47, 48) unter radialer Vorspannung gehalten sind.

8. Scheibenwischermotor nach einem der Ansprüche 1 bis 7,
**dadurch gekennzeichnet,**
**dass** der erste Bereich (42) des Fortsatzes (41) stiftförmig mit konischer Form ausgebildet ist.

## Revendications

1. Moteur d'essuie-glace (1), comprenant un arbre (30) portant une armature (35) et un collecteur (36), dans lequel le collecteur (36) coopère avec des balais (38), qui sont agencés sur un dispositif de support de balais (25), et dans lequel le dispositif de support de balais (25) est agencé fixement dans un boîtier de moteur d'essuie-glace (11), **caractérisé en ce que** le dispositif de support de balais (25) comporte au moins une première ouverture (39) conçue comme un orifice, qui est pénétrée par une extension de préférence conique (41) connectée au boîtier de moteur d'essuie-glace (11), dans lequel, sur le côté qui tourne le dos au côté de fixation de l'extension (41) dans le boîtier de moteur d'essuie-glace (11), l'extension (41) fait saillie au-dessus du dispositif de support de balais (25) dans la région de ladite au moins une première ouverture (39), et dans lequel un élément de fixation (50) est connecté au dispositif de support de balais (25), ledit élément de fixation, lors du déplacement axial l'un par rapport à l'autre de l'extension (41) et de l'élément de fixation (50), se cale avec l'extension (41) et fixe ainsi le dispositif de support de balais (25) sur l'extension (41) dans la direction longitudinal de l'arbre (30), l'élément de fixation (50) étant conçu sous la forme d'un disque de fixation (51) présentant des sections de fixation élastiquement déformables (53) qui coopèrent avec l'extension (41),
**caractérisé en ce que** le disque de fixation (51) présente au moins une griffe de fixation (56, 57) qui pénètre dans le dispositif de support de balais (25) dans la région d'une seconde ouverture (47, 48) conçue comme un trou et qui attache le disque de fixation (51) au dispositif de support de balais (25) de telle sorte qu'une ouverture de passage (52) pour l'extension (41) sur le disque de fixation (51) soit alignée avec la première ouverture (39).

2. Moteur d'essuie-glace selon la revendication 1,
**caractérisé en ce que** le dispositif de support de balais (25) présente une plaque de support de balais (28) qui porte plusieurs des balais (38), **en ce que** la plaque de support de balais (28) comporte un orifice (29) pour le guidage à travers l'arbre (30), et **en ce que** plusieurs, de préférence deux, extensions (41) et éléments de fixation (50) sont prévus et sont agencés à des distances angulaires uniformes autour de l'orifice (29).

3. Moteur d'essuie-glace selon la revendication 1 ou 2, **caractérisé en ce que** le boîtier de moteur d'essuie-glace (11) est conçu comme une pièce d'aluminium moulée en coquille sous pression au moins dans la région de ladite au moins une extension (41), et **en ce que** ladite au moins une extension (41) est une partie constituante de la pièce d'aluminium moulée en coquille sous pression.

4. Moteur d'essuie-glace selon les revendications 1 à 3, **caractérisé en ce que**, dans la région du dispositif de support de balais (25) et de l'armature (35), le boîtier de moteur d'essuie-glace (11) est conçu comme une seule pièce cylindrique comportant une ouverture de montage (19) pour un couvercle de palier (14), dans lequel, sur le côté qui s'étend à l'opposé de l'ouverture de montage (19), une région de base faisant saillie radialement vers l'intérieur (40) est prévue, région sur laquelle ladite au moins une extension (41) est agencée, pointant dans la direction de l'ouverture de montage (19) .

5. Moteur d'essuie-glace selon l'une des revendications 1 à 4, **caractérisé en ce que** ladite au moins une extension (41) présente une première région partielle (42), qui est agencée dans la région de la première ouverture (39) du dispositif de support de balais (25), et une seconde région partielle (43), qui est contiguë par l'intermédiaire d'un épaulement étagé (44) au côté de la première région partielle (42) qui tourne le dos au dispositif de support de balais (25), et **en ce que** l'épaulement (44) forme un arrêt axial pour le dispositif de support de balais (25).

6. Moteur d'essuie-glace selon l'une des revendications 1 à 5, **caractérisé en ce que** la première ouverture (39) du dispositif de support de balais (25) dans la région de la position d'extrémité axiale de l'extension (41) présente une aire de section transversale légèrement plus grande comparativement à l'ouverture de passage (52) du disque de fixation (51).

7. Moteur d'essuie-glace selon l'une des revendications 1 à 6, **caractérisé en ce que** deux griffes de fixation (56, 57) sont prévues, agencées décalées radialement l'une par rapport à l'autre de 180°, et **en ce que** les griffes de fixation (56, 57) sont agencées de manière à être élastiquement déplaçables dans une direction radiale par rapport à l'axe longitudinal (58) du disque de fixation (51), et sont maintenues dans la seconde ouverture (47, 48) sous une précontrainte radiale.

8. Moteur d'essuie-glace selon l'une des revendications 1 à 7, **caractérisé en ce que** la première région (42) de l'extension (41) est conçue sous la forme d'une broche de forme conique.
